# FASCICULE DE BREVET EUROPEEN

(11) **EP 4 170 316 B1**
(45) Date de publication et mention de la délivrance du brevet: **04.06.2025**
(21) Numéro de dépôt: 22202683.3
(22) Date de dépôt: 20.10.2022
(51) Int. Cl.: G01N 1/20

(54) **APPAREIL ET DISPOSITIF DE PRELEVEMENT D'ECHANTILLON**
VORRICHTUNG UND VORRICHTUNG ZUR PROBENENTNAHME
SAMPLE COLLECTION APPARATUS AND SAMPLE COLLECTION DEVICE

(30) Priorité: 22.10.2021 FR 2111270
(43) Date de publication de la demande: 26.04.2023
(73) Titulaire: Etablissements MAGYAR, 21000 Dijon (FR)
(72) Inventeur: MAGYAR, Daniel, PARIS (FR); MAGYAR, Laurent, PARIS (FR)
(74) Mandataire: Cabinet Camus Lebkiri

(56) Documents cités:
- EP-A1- 1 615 014
- DE-A1- 2 453 473

## Description

### DOMAINE TECHNIQUE DE L'INVENTION

Le domaine technique de l'invention est celui des tuyauteries et plus particulièrement des tuyauteries de pompage de produit liquide, comme par exemple du lait ou de l'eau polluée.

La présente invention concerne en particulier un appareil et un dispositif de prélèvement d'échantillon dans une telle tuyauterie sans altérer le produit dans la tuyauterie ou l'échantillon prélevé, ni polluer l'environnement et un procédé d'extraction dudit échantillon.

### ARRIERE-PLAN TECHNOLOGIQUE DE L'INVENTION

Il est parfois nécessaire d'analyser les produits circulant dans une tuyauterie afin de s'assurer de sa qualité sans pour autant polluer l'intérieur de la tuyauterie ou l'extérieur. Ainsi par exemple, lors d'une collecte de lait, il est nécessaire de vérifier sa qualité pour des raisons sanitaires.

Aujourd'hui, ce contrôle est réalisé en extrayant un échantillon du liquide qui est transvasé dans un flacon. Cependant ces opérations sont fastidieuses et peu sécurisées, il existe, en effet, un risque de pollution par l'environnement extérieur du liquide contenu dans le flacon, le volume du liquide dans le flacon n'est pas toujours maitrisé et il arrive que le liquide prélevé soit altéré lors du prélèvement, ce qui modifie ses propriétés chimiques ou organoleptiques.

Des appareils, des dispositifs et des procédés de prélèvement d'échantillons dans une tuyauterie sont connus par DE 2453473 et EP 1 615 014 A1.

### RESUME DE L'INVENTION

L'invention offre une solution aux problèmes évoqués précédemment, en permettant un prélèvement sûr du liquide sans altérer ses propriétés chimiques, ni dans la tuyauterie, ni dans le flacon de prélèvement.

Un premier aspect de l'invention concerne un appareil de prélèvement d'échantillon dans une tuyauterie, caractérisé en ce qu'il comprend :
- une partie tubulaire en forme de T ouverte à chaque extrémité,
- deux pistons concentriques coulissant à l'intérieur d'un pied du T :
   - un premier piston extérieur comprenant une paroi au bout de laquelle est fixée une aiguille et percée d'au moins deux trous en vis-à-vis, et mobile entre une première position où l'aiguille est dans la partie tubulaire et une deuxième position où l'aiguille sort de la partie tubulaire et les trous (31) sont entre deux branches (20) du T,
   - un deuxième piston intérieur coulissant à l'intérieur du premier piston extérieur et délimitant une chambre, les trous étant ouverts sur la chambre,
- une ouverture placée en vis-à-vis du pied du T.

Grace à l'appareil selon l'invention, on peut extraire le liquide sans que celui-ci entre en contact non désiré avec un corps extérieur, le liquide pouvant passer directement, grâce à l'aiguille, de la tuyauterie à un flacon placé devant l'ouverture. Cette ouverture pourra être sensiblement de même diamètre que l'aiguille.

Avantageusement, l'ouverture est refermable. On peut ainsi garantir que la tuyauterie est fermée pour pouvoir la nettoyer après le retrait du flacon.

Avantageusement, la partie tubulaire comprend un support en forme de U placé en face de l'ouverture. Grace à ce support, on peut maintenir un flacon en vis-à-vis de l'ouverture.

Avantageusement, le support comprend un troisième piston disposé en partie basse du U. Le flacon étant placé sur la partie basse du U, le piston permet de bien positionner le flacon en appui sur l'ouverture et de pouvoir facilement le retirer en éloignant le piston de l'ouverture.

Un deuxième aspect de l'invention concerne un dispositif de prélèvement d'échantillon dans une tuyauterie comprenant un appareil ayant au moins une des caractéristiques précédentes et un flacon de prélèvement placé sur le support. Le dispositif constitué de l'appareil de prélèvement et du flacon ensemble permet d'extraire le liquide de la tuyauterie et de stocker un échantillon dans le flacon.

Avantageusement, le flacon est placé sur le troisième piston. Le troisième piston permet d'approcher et d'éloigner le flacon de l'ouverture.

Avantageusement, le flacon de prélèvement est fermé par une membrane souple et étanche, la membrane étant percée par l'aiguille. L'échantillon extrait est préservé car le flacon ne présente qu'une perforation et est donc plus étanche. La membrane peut être en silicone ou en caoutchouc souple, permettant de se refermer quand on retire l'aiguille, celle-ci ne perçant la membrane que de façon étroite.

Avantageusement, le dispositif comprend un automate commandant les premier et deuxième pistons. L'automate va commander le premier piston extérieur pour sortir l'aiguille de la partie tubulaire pour la faire entrer dans le flacon et la sortir du flacon pour la rentrer dans la partie tubulaire, mais aussi le deuxième piston intérieur pour vider la chambre du liquide par l'aiguille dans le flacon. Le remplissage du flacon peut demander plusieurs aller-retour du piston intérieur en fonction de la taille de la chambre.

Un troisième aspect de l'invention concerne un procédé de prélèvement d'échantillon dans une tuyauterie où circule un liquide utilisant un dispositif selon le deuxième aspect de l'invention, le procédé est caractérisé en ce qu'il comprend les étapes successives suivantes :
- positionnement de l'aiguille dans le flacon,
- remplissage de la chambre par le liquide,
- déplacement du deuxième piston intérieur pour vider la chambre en poussant le liquide de la chambre vers le flacon à travers l'aiguille,
- déplacement du deuxième piston intérieur pour dégager la chambre et permettre un nouveau remplissage par le liquide.

Le remplissage de la chambre par le liquide se fait par un des trous en vis-à-vis, quand la chambre est remplie, le piston intérieur pousse le liquide vers l'aiguille qui est dans le flacon, ces deux opérations sont répétées autant de fois que nécessaire pour remplir le flacon.

Avantageusement, une fois le flacon rempli, le premier piston passe de la deuxième à la première position. Dans cette position l'aiguille est rentrée dans la partie tubulaire dégageant ainsi le flacon qui peut être envoyé pour analyse.

Avantageusement, après le remplissage du flacon et la remontée de l'aiguille dans la partie tubulaire, l'ouverture est refermée et une étape de nettoyage est effectuée dans la partie tubulaire. L'ouverture est refermée par un bouchon qui peut être vissé sur une excroissance autour de l'ouverture, la partie tubulaire qui comprend les pistons et l'aiguille peut être nettoyée.

Avantageusement, l'automate calcule :
- un nombre de courses du deuxième piston nécessaires au remplissage du flacon en fonction du volume de la chambre et du flacon,
- une cadence d'allers retours du deuxième piston en fonction du débit du liquide dans la tuyauterie.

On rentre dans l'automate le débit du produit dans la tuyauterie, et la quantité attendue de produit à pomper. Le volume du flacon qui reçoit l'échantillon et le débit du liquide sont connus. A partir de ces données, on déduit une durée de pompage de la quantité attendue de produit à pomper, le programme de l'automate définit le nombre de courses du deuxième piston nécessaire au remplissage du flacon, puis à quelle fréquences ces courses seront commandées, afin d'obtenir un échantillon représentatif de la quantité attendue de produit à pomper. L'automate arrêtera le deuxième piston quand le flacon sera plein et pourra relever le premier piston afin de pouvoir retirer le flacon. Si le troisième piston aussi actionné par l'automate, celui-ci fait descendre le piston et le flacon pour le libérer de l'évidement et pouvoir retirer le flacon.

L'invention et ses différentes applications seront mieux comprises à la lecture de la description qui suit et à l'examen des figures qui l'accompagnent données uniquement à titre d'exemple.

### BREVE DESCRIPTION DES FIGURES

Les figures sont présentées à titre d'exemple et nullement limitatif de l'invention.
[Fig. 1] est une coupe du dispositif selon l'invention, le premier piston étant dans sa première position, le deuxième piston étant en position haute ;

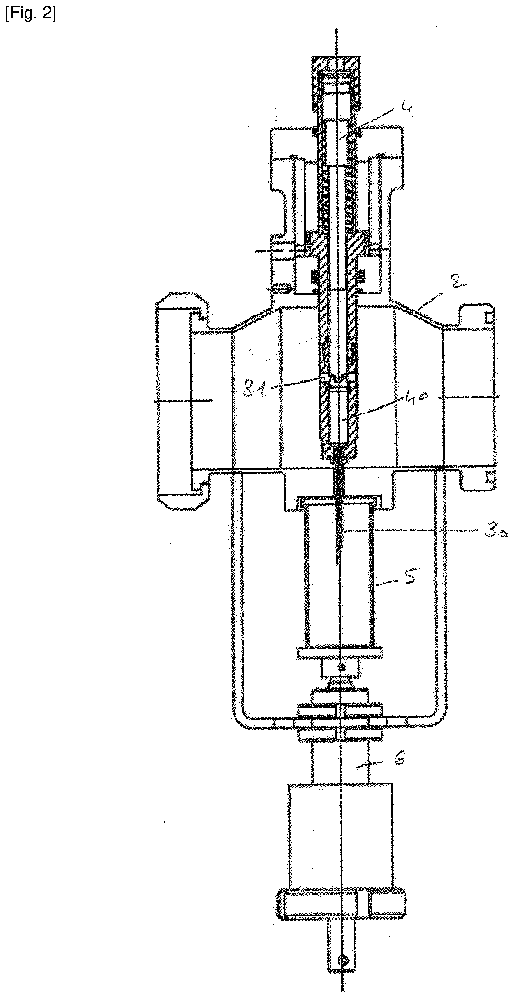

[Fig. 2] est une coupe du dispositif selon l'invention, le premier piston étant dans sa deuxième position, le deuxième étant piston en position haute ;

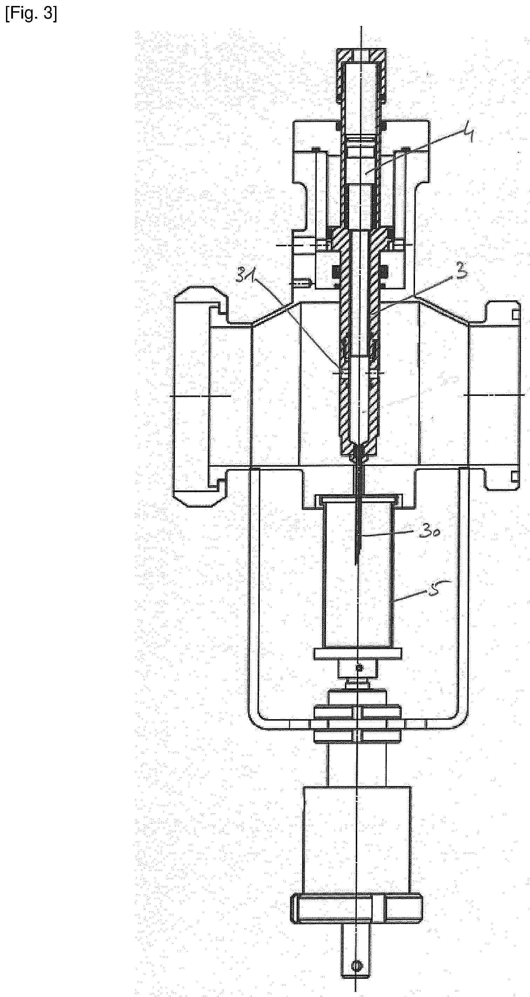

[Fig. 3] est une coupe du dispositif selon l'invention, le premier piston étant dans sa deuxième position, le deuxième piston étant en position basse.

### DESCRIPTION DETAILLEE

Dans toute la description, on appellera « haut », le haut des figures et « bas », le bas des figures.

Sauf précision contraire, un même élément apparaissant sur des figures différentes présente une référence unique.

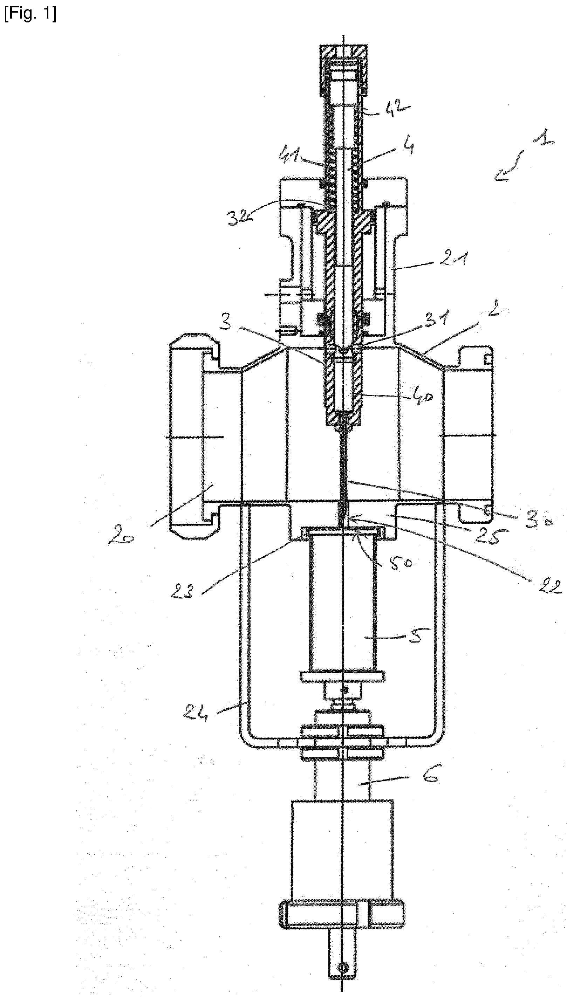

L'appareil 1 selon l'invention illustré à la figure 1, comprend une partie tubulaire 2 en forme de T, les deux branches 20 du T sont ouvertes pour être reliées à une tuyauterie (non représentée), le pied 21 du T est percé pour recevoir deux pistons concentriques : un premier piston extérieur 3 creux et un deuxième piston intérieur 4. Le premier piston 3 se prolonge par une aiguille 30.

Du liquide circule dans les branches 20 du T, ainsi on appellera « amont », la partie située avant la partie tubulaire 2 dans le sens de circulation du liquide et « aval » la partie située après la partie tubulaire 2 dans le sens de circulation du liquide.

La partie tubulaire 2 comprend une ouverture 22 en vis-à-vis du pied du T pour laisser passer l'aiguille 30. Cette ouverture 22 est cylindrique et sensiblement de même diamètre que l'aiguille 30. L'ouverture 22 débouche sur un évidement 23 prévu dans un excroissance 25 et destiné à recevoir le haut d'un flacon 5.

Le premier piston 3 a deux positions : une première position, haute où l'aiguille 30 est dans la partie tubulaire 2 et une deuxième position, basse où l'aiguille 30 sort de la partie tubulaire 2 par l'ouverture 22. Le premier piston 3 est percé d'au moins deux trous 31 en vis-à-vis dans le sens de circulation du liquide. D'autres trous peuvent être prévus, soit autour circonférenciellement, soit axialement par rapport à l'axe du piston. En position basse, ces trous 31 sont dans le courant de liquide entre les deux branches 20.

Le deuxième piston 4 a deux positions : une position haute où une chambre 40 est délimitée par les parois intérieures du premier piston 3 et l'extrémité du deuxième piston 4 et une position basse où la chambre 40 est complétement occupée par le deuxième piston 4. Les trous sont ouverts sur la chambre 40. Un ressort 41 est placé entre un premier épaulement 32 du premier piston 3 et un deuxième épaulement 42 du deuxième piston 4, il permet de la remontée du deuxième piston 4.

Le flacon 5 est fermé par une membrane 50 souple et étanche, et en appui sur un troisième piston 6. Un support 24 en forme de U est fixé sous la partie tubulaire 2, il maintient le troisième piston 5 en face de l'ouverture 22 et sert de support au flacon 5. Quand le troisième piston 6 est en position haute et que le flacon 5 est posé dessus, la membrane 50 est en contact avec l'évidement 23 de façon à fermer l'ouverture 22. En position basse, le troisième piston 6 libère le flacon 5 de l'évidement 23, on peut alors retirer le flacon 5.

Nous allons maintenant décrire le fonctionnement du dispositif constitué de l'appareil 1 et du flacon 5 pour en extraire un échantillon.

Quand le liquide circule dans la tuyauterie, il passe dans la partie tubulaire 2, le premier piston 3 est dans la deuxième position et le deuxième piston 4 dans la position haute, de cette façon les trous 31 sont dans le courant et le liquide rempli la chambre 40, tandis que l'aiguille 30 est dans le flacon 5. Une fois la chambre 40 remplie, le deuxième piston 4 descend vers la position basse pour vider la chambre 40 dans le flacon 5. Le deuxième piston remonte pour libérer la chambre qui se remplit de nouveau de liquide, une fois la chambre pleine elle est de nouveau vidée dans le flacon, ces opérations se répètent jusqu'au remplissage désiré du flacon 5.

Un automate peut commander les deux pistons 3 et 4 afin coordonner leur cadence avec le débit du liquide et la quantité de liquide que l'on souhaite prélever dans le flacon 5.

Une fois le flacon 5 rempli, on remonte le premier piston 3 dans la première position, ce qui retire l'aiguille 30 du flacon 5 et de sa membrane 50. On descend le troisième piston 6 pour descendre le flacon 5, le sortir de l'évidement 23, le retirer et aller l'analyser. On peut alors placer un nouveau flacon ou fermer l'ouverture par un bouchon. L'excroissance 25 peut être filetée afin de visser le bouchon (non représenté) afin de fermer l'ouverture 22, on peut aussi enfoncer un capuchon, ou le clipper.

L'automate peut également commander le troisième piston 6 pour dégager le flacon 5 quand celui-ci est plein.

Quand la tuyauterie est vide, on peut laver le dispositif une fois l'aiguille 30 relevée, le bouchon posé et la chambre 40 vidée, en injectant de l'eau savonneuse ou un liquide désinfectant.

## Revendications

1. Appareil (1) de prélèvement d'échantillon dans une tuyauterie, l'appareil comprend :
- une partie tubulaire (2) en forme de T ouverte à chaque extrémité,
- deux pistons (3, 4) concentriques coulissant à l'intérieur d'un pied du T :
• un premier piston (3) extérieur comprenant une paroi au bout de laquelle est fixée une aiguille (30) et percé d'au moins deux trous (31) en vis-à-vis, et mobile entre une première position où l'aiguille (30) est dans la partie tubulaire (2) et une deuxième position où l'aiguille (30) sort de la partie tubulaire (2) et les trous (31) sont entre deux branches (20) du T,
• un deuxième piston (4) intérieur coulissant à l'intérieur du premier piston extérieur et délimitant une chambre (40), les trous (31) étant ouverts sur la chambre (40),
- une ouverture (22) placée en vis-à-vis du pied du T.

2. Appareil (1) selon la revendication 1 **caractérisé en ce que** l'ouverture (22) est refermable.

3. Appareil (1) selon une des revendications précédentes **caractérisé en ce que** la partie tubulaire (2) comprend un support (24) en forme de U placé en face de l'ouverture (22).

4. Appareil (1) selon la revendication 3 **caractérisé en ce que** le support (24) comprend un troisième piston (6) disposé en partie basse du U.

5. Dispositif de prélèvement d'échantillon dans une tuyauterie **caractérisé en ce qu'**il comprend un appareil (1) selon une des revendications précédentes et un flacon (5) de prélèvement placé sur le support (24).

6. Dispositif selon la revendication 5 en ce qu'elle dépend de la revendication 4 **caractérisé en ce que** le flacon (5) est placé sur le troisième piston (6).

7. Dispositif selon une des revendications 5 ou 6, **caractérisé en ce que** le flacon (5) de prélèvement est fermé par une membrane (50) souple et étanche, la membrane (50) étant percée par l'aiguille (30).

8. Dispositif selon une des revendications 5 à 7, **caractérisé en ce qu'**il comprend un automate commandant les premier et deuxième pistons (3, 4).

9. Procédé de prélèvement d'échantillon dans une tuyauterie où circule un liquide utilisant un dispositif selon une des revendications 5 à 8, **caractérisé en ce qu'**il comprend les étapes successives suivantes :
- positionnement de l'aiguille (30) dans le flacon (5),
- remplissage de la chambre (40) par le liquide,
- déplacement du deuxième piston (4) intérieur pour vider la chambre (40) en poussant le liquide de la chambre (40) vers le flacon (5) à travers l'aiguille (30),
- déplacement du deuxième piston (4) intérieur pour dégager la chambre (40) et permettre un nouveau remplissage par le liquide.

10. Procédé selon la revendication précédente, **caractérisé en ce qu'**une fois le flacon (5) rempli, le premier piston (3) passe de la deuxième à la première position.

11. Procédé selon la revendication précédente, **caractérisé en ce qu'**après le remplissage du flacon (5) et la remontée de l'aiguille (30) dans la partie tubulaire, l'ouverture (22) est refermée et une étape de nettoyage est effectuée dans la partie tubulaire (2).

12. Procédé selon une des revendications 9 à 11 en ce qu'elles dépendent de la revendication 8, **caractérisé en ce que** l'automate calcule :
- un nombre de courses du deuxième piston nécessaires au remplissage du flacon en fonction du volume de la chambre et du flacon,
- une cadence d'allers retours du deuxième piston en fonction du débit du liquide dans la tuyauterie.

## Patentansprüche

1. Vorrichtung (1) zur Entnahme von Proben aus einer Rohrleitung, wobei die Vorrichtung umfasst:
- einen T-förmigen, rohrförmigen Teil (2), der an jedem Ende offen ist,
- zwei konzentrische Kolben (3, 4), die im Inneren eines Fußes des T-Stücks gleiten:
∘ wobei ein erster äußerer Kolben (3), der eine Wand umfasst, an deren Ende eine Nadel (30) befestigt ist, und der von mindestens zwei einander gegenüberliegenden Löchern (31) durchbohrt ist, und der zwischen einer ersten Position, in der sich die Nadel (30) in dem rohrförmigen Teil (2) befindet, und einer zweiten Position, in der die Nadel (30) aus dem rohrförmigen Teil (2) herausragt, beweglich ist, und sich die Löcher (31) zwischen zwei Schenkeln (20) des T-Stücks befinden,
∘ wobei ein zweiter innerer Kolben (4), der im Inneren des ersten äußeren Kolbens gleitet und eine Kammer (40) abgrenzt, und die Löcher (31) zur Kammer (40) hin offen sind,
- eine Öffnung (22), die gegenüber dem Fuß des T-Stücks platziert ist.

2. Vorrichtung (1) nach Anspruch 1, **dadurch gekennzeichnet, dass** die Öffnung (22) wiederverschließbar ist.

3. Vorrichtung (1) nach einem der vorhergehenden Ansprüche, **dadurch gekennzeichnet, dass** der rohrförmige Teil (2) einen U-förmigen Träger (24) umfasst, der gegenüber der Öffnung (22) angeordnet ist.

4. Vorrichtung (1) nach Anspruch 3, **dadurch gekennzeichnet, dass** der Träger (24) einen dritten Kolben (6) umfasst, der im unteren Teil des U-Stücks angeordnet ist.

5. Vorrichtung zur Entnahme einer Probe aus einer Rohrleitung, **dadurch gekennzeichnet, dass** sie ein Gerät (1) nach einem der vorhergehenden Ansprüche und einen Entnahmebehälter (5) umfasst, der auf dem Träger (24) angeordnet ist.

6. Vorrichtung nach Anspruch 5 in Abhängigkeit von Anspruch 4, **dadurch gekennzeichnet, dass** der Behälter (5) auf dem dritten Kolben (6) angeordnet ist.

7. Vorrichtung nach einem der Ansprüche 5 oder 6, **dadurch gekennzeichnet, dass** der Entnahmebehälter (5) durch eine flexible und dichte Membran (50) verschlossen ist, wobei die Membran (50) von der Nadel (30) durchstochen wird.

8. Vorrichtung nach einem der Ansprüche 5 bis 7, **dadurch gekennzeichnet, dass** sie einen Automaten umfasst, der den ersten und den zweiten Kolben (3, 4) steuert.

9. Verfahren zur Entnahme einer Probe aus einer Rohrleitung, durch die eine Flüssigkeit fließt, unter Verwendung einer Vorrichtung nach einem der Ansprüche 5 bis 8, **dadurch gekennzeichnet, dass** es die folgenden aufeinanderfolgenden Schritte umfasst:
- Positionierung der Nadel (30) im Behälter (5),
- Füllen der Kammer (40) mit der Flüssigkeit,
- Bewegen des zweiten inneren Kolbens (4), um die Kammer (40) zu leeren, indem die Flüssigkeit durch die Nadel (30) aus der Kammer (40) in den Behälter (5) gedrückt wird,
- Bewegen des zweiten inneren Kolbens (4), um die Kammer (40) freizugeben und ein erneutes Befüllen mit der Flüssigkeit zu ermöglichen.

10. Verfahren nach dem vorhergehenden Anspruch, **dadurch gekennzeichnet, dass** der erste Kolben (3) nach dem Füllen des Behälters (5) von der zweiten in die erste Position bewegt wird.

11. Verfahren nach dem vorhergehenden Anspruch, **dadurch gekennzeichnet, dass** nach dem Füllen des Behälters (5) und dem Hochziehen der Nadel (30) in den rohrförmigen Teil die Öffnung (22) wieder geschlossen wird und ein Reinigungsschritt im rohrförmigen Teil (2) durchgeführt wird.

12. Verfahren nach einem der Ansprüche 9 bis 11, in Abhängigkeit von Anspruch 8, **dadurch gekennzeichnet, dass** der Automat berechnet:
- eine Anzahl von Hüben des zweiten Kolbens, die zum Füllen des Behälters erforderlich sind, in Abhängigkeit vom Volumen der Kammer und des Behälters,
- eine Taktung der Hin- und Herbewegung des zweiten Kolbens in Abhängigkeit von der Lipidmenge in der Rohrleitung.

## Claims

1. An apparatus (1) for taking a sample from a piping, the apparatus comprising:
- a T-shaped tubular part (2) open at each end,
- two concentric pistons (3, 4) sliding inside a leg of the T:
• a first, external, piston (3) comprising a wall at the end of which a needle (30) is attached and pierced with at least two holes (31) facing each other, and movable between a first position where the needle (30) is in the tubular part (2) and a second position where the needle (30) comes out of the tubular part (2) and the holes (31) are between two arms of a crossbar (20) of the T,
• a second, internal, piston (4) sliding inside the first, external, piston and delimiting a chamber (40), the holes (31) being open to the chamber (40),
- an opening (22) placed facing the leg of the T.

2. The apparatus (1) according to claim 1, **characterised in that** the opening (22) is reclosable.

3. The apparatus (1) according to one of the preceding claims, **characterised in that** the tubular part (2) comprises a U-shaped support (24) placed opposite the opening (22).

4. The apparatus (1) according to claim 3, **characterised in that** the support (24) comprises a third piston (6) arranged in the lower part of the U.

5. A device for taking a sample from a piping, **characterised in that** it comprises an apparatus (1) according to one of the preceding claims and a sampling vial (5) placed on the support (24).

6. The device according to claim 5, in that it depends on claim 4, **characterised in that** the vial (5) is placed on the third piston (6).

7. The device according to one of claims 5 or 6, **characterised in that** the sampling vial (5) is closed by a flexible and sealed membrane (50), the membrane (50) being pierced by the needle (30).

8. The device according to one of claims 5 to 7, **characterised in that** it comprises an automaton controlling the first and second pistons (3, 4).

9. A method for taking a sample in a piping in which a liquid circulates using a device according to one of claims 5 to 8, **characterised in that** it comprises the following successive steps:
- positioning the needle (30) in the vial (5),
- filling the chamber (40) with the liquid,
- moving the second, internal, piston (4) to empty the chamber (40) by pushing the liquid from the chamber (40) towards the vial (5) through the needle (30),
- moving the second, internal, piston (4) to clear the chamber (40) and allow filling again with the liquid.

10. The method according to the preceding claim, **characterised in that** once the vial (5) is filled, the first piston (3) shifts from the second to the first position.

11. The method according to the preceding claim, **characterised in that** after the vial (5) has been filled and the needle (30) has been raised in the tubular part, the opening (22) is reclosed and a cleaning step is carried out in the tubular part (2).

12. The method according to one of claims 9 to 11 in that they depend on claim 8, **characterised in that** the automaton calculates:
- a number of strokes of the second piston necessary to fill the vial as a function of the volume of the chamber and the vial,
- a rate of return trips of the second piston as a function of the flow rate of the liquid in the piping.
